# EUROPEAN PATENT SPECIFICATION

(11) **EP 4 534 518 B1**
(45) Date of publication and mention of the grant of the patent: **22.04.2026**
(21) Application number: 22944782.6
(22) Date of filing: 31.05.2022
(51) Int. Cl.: C10L 3/08, C01B 3/02, C01B 3/38, C25B 15/021, C25B 1/042, C25B 15/08, C25B 1/23, H01M 8/04014, H01M 8/0612, H01M 8/0668

(54) **METHANE GENERATION SYSTEM**
METHANERZEUGUNGSSYSTEM
SYSTÈME DE PRODUCTION DE MÉTHANE

(43) Date of publication of application: 09.04.2025
(73) Proprietor: MITSUBISHI ELECTRIC CORPORATION, Chiyoda-ku Tokyo 100-8310 (JP)
(72) Inventor: ONAKA Yoji, Tokyo 100-8310 (JP); TANISHIMA Makoto, Tokyo 100-8310 (JP); SHINOKI Toshio, Tokyo 100-8310 (JP); KAWAMOTO Makoto, Tokyo 100-8310 (JP); NAKASHIMA Seiji, Tokyo 100-8310 (JP)
(74) Representative: Meissner Bolte Partnerschaft mbB
(86) International application number: PCT/JP2022/022025
(87) International publication number: WO 2023/233493

(56) References cited:
- WO-A1-2015/085981
- WO-A1-2021/199103
- DE-A1- 102018 007 001
- JP-A- 2005 158 661
- JP-A- 2015 513 531
- JP-A- 2022 064 073
- JP-A- H0 757 756
- JP-A- H04 101 364

## Description

### Technical Field

The present invention relates to a methane generation system.

### Background Art

Patent Document 1 discloses a device for producing methane using carbon dioxide and water. This device reduces water and carbon dioxide to obtain a synthesis gas including hydrogen and carbon monoxide. This device generates methane from the synthesis gas.

### Citation List

### Patent Documents

Patent Document 1: Japanese Unexamined Patent Application, First Publication JP 2022- 22 978 A

### Summary of the Invention

### Problem to be Solved by the Invention

In the technology, there is a probability that the generation efficiency of methane is lowered.

In view of the above circumstances, an object of the present invention is to provide a methane generation system capable of increasing the generation efficiency of methane.

### Means to Solve the Problem

One aspect of the methane generation system according to the present invention includes a methane generation unit including an electrolysis device that is configured to electrolyze water to obtain hydrogen and a methane reactor that is configured to obtain a fuel gas containing methane by a methanation reaction using the hydrogen; a reformer that is configured to reform the fuel gas to obtain a reformed gas; a fuel cell that is configured to generate electricity by a reaction of obtaining a product gas from the reformed gas and an oxygen-containing gas; a recovery device that is configured to separate a recovery gas containing carbon dioxide from return fluid which is a part of the product gas; and a circulation path through which the recovery gas is guided to the methane generation unit.

### Effects of the Invention

According to the present invention, it is possible to provide a methane generation system capable of increasing a generation efficiency of methane.

### Brief Description of Drawings

FIG. 1 A schematic diagram of a methane generation system according to Embodiment 1.
FIG. 2 A schematic diagram of a methane generation system according to Embodiment 2.
FIG. 3 A schematic diagram of a methane generation system according to Embodiment 3.
FIG. 4 A schematic diagram of a part of a methane generation system according to Embodiment 4.
FIG. 5 A schematic diagram of a part of a methane generation system according to Embodiment 5.
FIG. 6 A schematic diagram of a methane generation system according to Embodiment 6.
FIG. 7 A schematic diagram of a methane generation system according to Embodiment 7.

### Description of Embodiments

Hereinafter, an embodiment of the present invention will be described with reference to the drawings. The scope of the present invention is not limited to the following embodiment, and can be changed in any way within the scope of technical ideas of the present invention.

### Embodiment 1

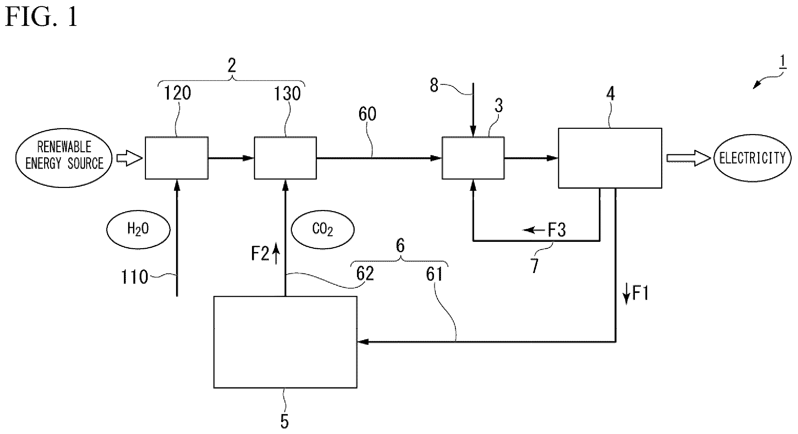

FIG. 1 is a schematic diagram showing a methane generation system in Embodiment 1.

As shown in FIG. 1, the methane generation system 1 includes a methane generation unit 2, a reformer 3, a fuel cell 4, a recovery device 5, a circulation path 6, and a return path 7. The methane generation system is also referred to as a "fuel cell system".

The methane generation unit 2 includes a supply path 110, an electrolysis device 120, and a methane reactor 130.

The supply path 110 guides water (water vapor) supplied from a supply source (not shown) to the electrolysis device 120. The supply path 110 may be provided with an evaporator (water vapor generation unit) that vaporizes water.

The electrolysis device 120 performs electrolysis of water (H₂O) to obtain a mixed gas including hydrogen (H₂) and oxygen (O₂). The electrolysis proceeds, for example, according to the following Expression (I).

2H₂O → 2H₂ + O₂ ··· (I)

In the electrolysis device 120, for example, electrolysis can be performed using power generated from renewable energy sources (for example, solar power generation, wind power generation, and the like). Methane obtained using renewable energy does not generate additional carbon dioxide when combusted, and thus can be considered a carbon-neutral fuel that does not affect global warming.

The methane reactor 130 obtains a fuel gas containing methane (CH₄) and water (H₂O) from carbon dioxide (CO₂) supplied from the circulation path 6 and hydrogen (H₂) from the electrolysis device 120 by a methanation reaction. The methanation reaction proceeds, for example, according to the following Expression (II).

CO₂ + 4H₂ → CH₄ + 2H₂O ... (II)

The methane reactor 130 preferably includes a methanation catalyst that comes into contact with the mixed gas. Examples of the methanation catalyst include an Ni catalyst and an Ru catalyst. The methanation catalyst promotes the methanation reaction.

The fuel gas obtained in the methane reactor 130 includes not only methane and water but also unreacted carbon dioxide, hydrogen (H₂), and the like.

The fuel gas is guided to the reformer 3 through a discharge path 60. It is desirable for the water contained in the fuel gas guided to reformer 3 to be in the form of water vapor.

The reformer 3 obtains a reformed gas containing carbon monoxide (CO) and hydrogen (H₂) from methane and water (water vapor) contained in the fuel gas by a reforming reaction. The reforming reaction proceeds, for example, according to the following Expression (III).

CH₄ + H₂O → CO + 3H₂ ··· (III)

The reformer 3 preferably includes a reforming catalyst that comes into contact with the fuel gas. Examples of the reforming catalyst include a Ni catalyst and a Ru catalyst. The reforming catalyst promotes the reforming reaction.

It is desirable that the reformer 3 includes a carbon monoxide converter and a carbon monoxide remover. Concentration of carbon monoxide in the reformed gas can be reduced by the carbon monoxide converter and the carbon monoxide remover. The carbon monoxide converter includes a carbon monoxide conversion catalyst such as a Cu catalyst and an Fe catalyst.

In the carbon monoxide converter, a part of the carbon monoxide is converted into carbon dioxide. The carbon monoxide remover includes a methanation catalyst that methanates carbon monoxide. Examples of the methanation catalyst include a Ru catalyst. In the carbon monoxide remover, a part of the carbon monoxide becomes methane.

Since the concentration of carbon monoxide is lowered by the carbon monoxide converter and the carbon monoxide remover, the reformed gas becomes a gas containing hydrogen (H₂) as a main component.

The oxygen-containing gas (oxidant-containing gas) is supplied from the supply path 8 and is guided to the fuel cell 4 via the reformer 3. The oxygen-containing gas contains oxygen (O₂) as an oxidant. The oxygen-containing gas is, for example, air.

The reformed gas is supplied to an anode of the fuel cell 4. The oxygen-containing gas is supplied to a cathode of the fuel cell 4. In the fuel cell 4, electricity is generated by a reaction between the reformed gas containing hydrogen (H₂) and the oxygen-containing gas. This reaction is an exothermic reaction. In the fuel cell 4, a product gas containing water (water vapor) is obtained by a reaction between the reformed gas and the oxygen-containing gas. The product gas contains not only water (water vapor) but also unreacted hydrogen (H₂) and carbon dioxide.

A part of the product gas is discharged through a discharge path (not shown).

The recovery device 5 separates and recovers a recovery gas F2 containing carbon dioxide from return fluid F1, which is a part of the product gas.

In the recovery device 5, for example, separation methods such as adsorption separation, membrane separation, cooling separation, centrifugal separation, gravity separation, or gas-liquid separation are adopted. The recovery device 5 may adopt one of these separation methods or a combination of two or more of these separation methods.

The recovery device 5 using adsorption separation adsorbs and separates, for example, a specific component using an adsorbent, an adsorptive liquid, or the like. Examples of the adsorbent include silica gel, zeolite, and activated carbon. Specifically, by adsorbing a component including carbon dioxide onto the adsorbent, the component can be separated from other components. The adsorbent may be granular, powdery, or the like. The granular shape is, for example, a bead shape (spherical) or a pellet shape (cylindrical). In the case where a powdery adsorbent is used, the adsorbent may be supported on a surface of a base material. The base material may, for example, have a honeycomb shape.

The recovery device 5 using adsorption separation has a function of separating carbon dioxide from the adsorbent. The recovery device 5 includes, for example, a heating device. The heating device heats the adsorbent to separate carbon dioxide from the adsorbent. The recovery device 5 may include a decompression device such as a decompression pump. The decompression device separates carbon dioxide from the adsorbent by placing the adsorbent under reduced pressure.

The recovery device 5 using membrane separation separates a specific component from other components by using, for example, a permeable membrane that allows the passage of a low-molecular-weight component. Specifically, for example, a component including hydrogen (H₂) can be separated from a component including carbon dioxide by using a palladium permeable membrane.

The recovery device 5 using cooling separation, for example, liquefies a specific component by cooling to separate the specific component from other components (gases). Specifically, for example, a component including water can be liquefied and separated from a gas including carbon dioxide.

The recovery device 5 using centrifugal separation, for example, liquefies a specific component (a component including water) by cooling to separate the component from other components (a gas including carbon dioxide) by centrifugal force. The recovery device 5 using gravity separation, for example, liquefies a specific component (a component including water) by cooling to separate the component from other components (a gas including carbon dioxide) by force of gravity. The recovery device 5 using gas-liquid separation, for example, liquefies a specific component (a component including water) by cooling to separate the component from other components (a gas including carbon dioxide) by force of gravity, centrifugal force, surface tension, or the like.

In the recovery device 5, a recovery gas F2 with a higher carbon dioxide concentration than the return fluid F1 can be obtained.

The circulation path 6 includes a derivation passage 61 and a return passage 62.

The derivation passage 61 connects the fuel cell 4 and the recovery device 5. The derivation passage 61 takes out a part of the product gas from the fuel cell 4 as the return fluid F1. The derivation passage 61 guides the return fluid F1 to the recovery device 5.

The return passage 62 connects the recovery device 5 and the methane reactor 130. The return passage 62 guides the recovery gas F2 containing carbon dioxide to the methane reactor 130.

The return path 7 connects the fuel cell 4 and the reformer 3. The return path 7 takes out a part of the product gas from the fuel cell 4 as return fluid F3 and returns the part of the product gas to the reformer 3.

The methane generation system 1 includes a recovery device 5 that separates a recovery gas F2, which contains unreacted carbon dioxide, from a part (return fluid F1) of the product gas discharged from the fuel cell 4, and a circulation path 6 that guides the recovery gas F2 to the methane generation unit 2. With the methane generation system 1, the recovery gas F2, which contains carbon dioxide, is returned to the methane generation unit 2, thereby increasing the efficiency of the methanation reaction in the methane generation unit 2. Therefore, the methane generation efficiency can be increased.

Since the methane generation system 1 includes the return path 7 that guides the return fluid F3 to the reformer 3, the heat generated by the fuel cell 4 can be utilized in the reformer 3. Therefore, the energy efficiency can be increased.

Since the methane generation system 1 includes the return path 7, the amount of carbon dioxide to be generated in the reformer 3 can be increased. Therefore, concentration of carbon dioxide in the product gas discharged from the fuel cell 4 can be increased. Therefore, the recovery efficiency of carbon dioxide in the recovery device 5 can be increased.

### Embodiment 2

Hereinafter, a methane generation system according to Embodiment 2 will be described. The methane generation system according to the present embodiment has a configuration common with the methane generation system of Embodiment 1. Therefore, the differences from the methane generation system of Embodiment 1 will be mainly described below. The same configurations as those of Embodiment 1 are designated by the same reference numerals, and a description thereof will be omitted.

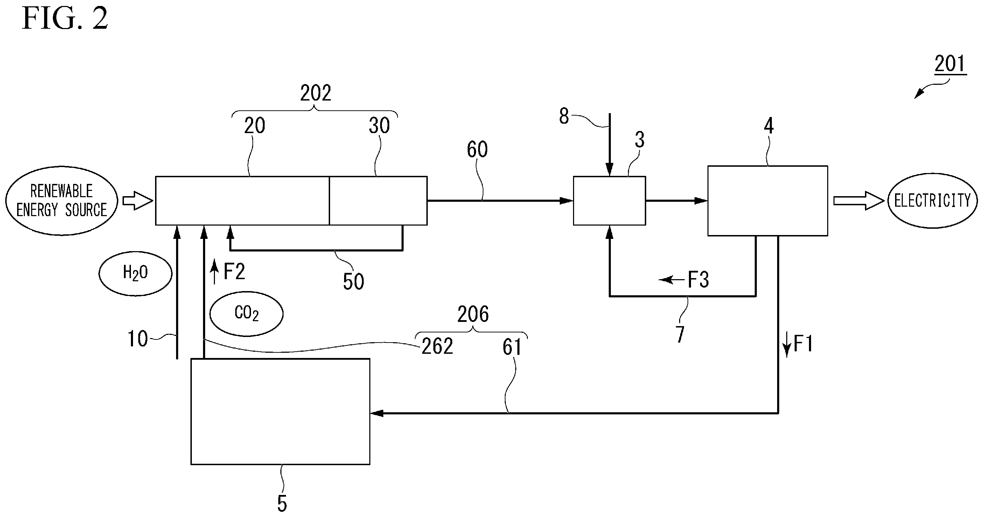

FIG. 2 is a schematic diagram of a methane generation system according to Embodiment 2.

As shown in FIG. 2, the methane generation system 201 includes a methane generation unit 202 instead of the methane generation unit 2. The methane generation system 201 includes a circulation path 206 instead of the circulation path 6. In these points, the methane generation system 201 is different from the methane generation system 1 (see FIG. 1) of Embodiment 1.

The methane generation unit 202 includes a supply path 10, a co-electrolysis device 20, a methane reactor 30, and a circulation path 50.

The supply path 10 guides the water (water vapor) supplied from a supply source (not shown) to the co-electrolysis device 20. The supply path 10 may be provided with an evaporator (water vapor generation unit) that vaporizes water. In the supply path 10, only water may be supplied, or both water and carbon dioxide may be supplied.

The co-electrolysis device 20 includes, for example, a solid oxide-based electrolysis cell including a cathode electrode and an anode electrode. In the solid oxide-based electrolysis cell, for example, a solid oxide with oxygen ion conductivity is used. As the electrolyte, zirconia-based oxides are used. The co-electrolysis device 20 is an example of an electrolysis device.

The co-electrolysis device 20 supplies the water (or water and carbon dioxide) supplied from the supply path 10 to the cathode electrode of the solid oxide-based electrolysis cell. It is desirable that the water used in the co-electrolysis in the solid oxide-based electrolysis cell be water vapor. In the co-electrolysis device 20, the recovery gas F2, which contains carbon dioxide and is guided from the circulation path 206, is supplied to the cathode electrode of the solid oxide-based electrolysis cell.

The co-electrolysis device 20 may include a heating device that heats the solid oxide-based electrolysis cell. The heating device can adjust the temperature in the solid oxide-based electrolysis cell to a temperature suitable for the co-electrolysis reaction.

The ratio of the carbon dioxide and water supplied to the solid oxide-based electrolysis cell can be determined according to the ratio of the components (carbon monoxide, hydrogen) of the target mixed gas.

The co-electrolysis device 20 obtains a mixed gas including carbon monoxide (CO) and hydrogen (H₂) by co-electrolysis of carbon dioxide (CO₂) and water (H₂O). The co-electrolysis proceeds, for example, according to the following Expression (IV). This reaction is an endothermic reaction.

CO₂ + H₂O → CO + H₂ + O₂ ··· (IV)

In the co-electrolysis device 20, for example, co-electrolysis can be performed using power generated from renewable energy sources (for example, solar power generation, wind power generation, and the like). Methane obtained using renewable energy does not generate additional carbon dioxide when combusted, and thus can be considered a carbon-neutral fuel that does not affect global warming.

In the present embodiment, the co-electrolysis device 20 that obtains carbon monoxide and hydrogen by co-electrolyzing carbon dioxide and water is used, but the device for obtaining carbon monoxide and hydrogen (H₂) is not limited to the co-electrolysis device. For example, an electrolysis device in which a step of electrolyzing carbon dioxide to obtain carbon monoxide and a step of electrolyzing water to obtain hydrogen (H₂) are independently performed can also be used.

The mixed gas obtained by the co-electrolysis device 20 includes not only carbon monoxide and hydrogen (H₂) but also unreacted carbon dioxide and water.

An inlet of the co-electrolysis device 20 is a location where the supply path 10 and the return passage 262 are connected. An outlet of the co-electrolysis device 20 is a location where the mixed gas is discharged.

The methane reactor 30 obtains a fuel gas, which contains methane (CH₄) and water (H₂O), from carbon monoxide (CO) and hydrogen (H₂) by a methanation reaction. The methanation reaction proceeds, for example, according to the following Expression (V). This reaction is an exothermic reaction.

CO + 3H₂ → CH₄ + H₂O ··· (V)

The methane reactor 30 preferably includes a methanation catalyst that comes into contact with the mixed gas. Examples of the methanation catalyst include an Ni catalyst and an Ru catalyst. The methanation catalyst promotes the methanation reaction.

The methane reactor 30 may generate methanol from the mixed gas and subsequently generate methane from the methanol.

The fuel gas obtained in the methane reactor 30 contains not only methane and water but also unreacted carbon monoxide, hydrogen (H₂), carbon dioxide, and the like.

The fuel gas is guided to the reformer 3 through a discharge path 60.

An inlet of the methane reactor 30 is a location where the mixed gas is guided from the co-electrolysis device 20. An outlet of the methane reactor 30 is a location where the discharge path 60 is connected.

The circulation path 50 connects the methane reactor 30 and the co-electrolysis device 20. A start end (first end) of the circulation path 50 is connected to a position close to the outlet of the methane reactor 30. A terminal (second end) of the circulation path 50 is connected to the co-electrolysis device 20. A part of the fuel gas obtained in the methane reactor 30 is guided to the co-electrolysis device 20 through the circulation path 50.

The circulation path 206 includes a derivation passage 61 and a return passage 262. The return passage 262 connects the recovery device 5 and the co-electrolysis device 20. The return passage 262 guides the recovery gas F2, which contains carbon dioxide, to the co-electrolysis device 20.

The methane generation system 201 includes a recovery device 5 that separates a recovery gas F2, which contains carbon dioxide, from the product gas (return fluid F1) discharged from the fuel cell 4, and a circulation path 206 that guides the recovery gas F2 to the methane generation unit 202. With the methane generation system 1, the recovery gas F2, which contains unreacted carbon dioxide, is returned to the methane generation unit 202, thereby increasing the efficiency of the methanation reaction in the methane generation unit 202. Therefore, the methane generation efficiency can be increased.

In the methane generation system 201, since the co-electrolysis device 20 is used as the electrolysis device, a mixed gas containing carbon monoxide and hydrogen (H₂) can be obtained by the co-electrolysis. Therefore, the efficiency of the methanation reaction in the methane reactor 30 can be increased compared to using the mixed gas containing carbon dioxide and hydrogen.

Since the methane generation system 201 includes the circulation path 6 that guides the recovery gas F2 to the methane generation unit 2, the heat generated by the fuel cell 4 can be utilized by the co-electrolysis device 20. Therefore, the energy efficiency can be increased.

### Embodiment 3

Hereinafter, a methane generation system according to Embodiment 3 will be described. The same configurations as those of Embodiment 2 are designated by the same reference numerals, and a description thereof will be omitted.

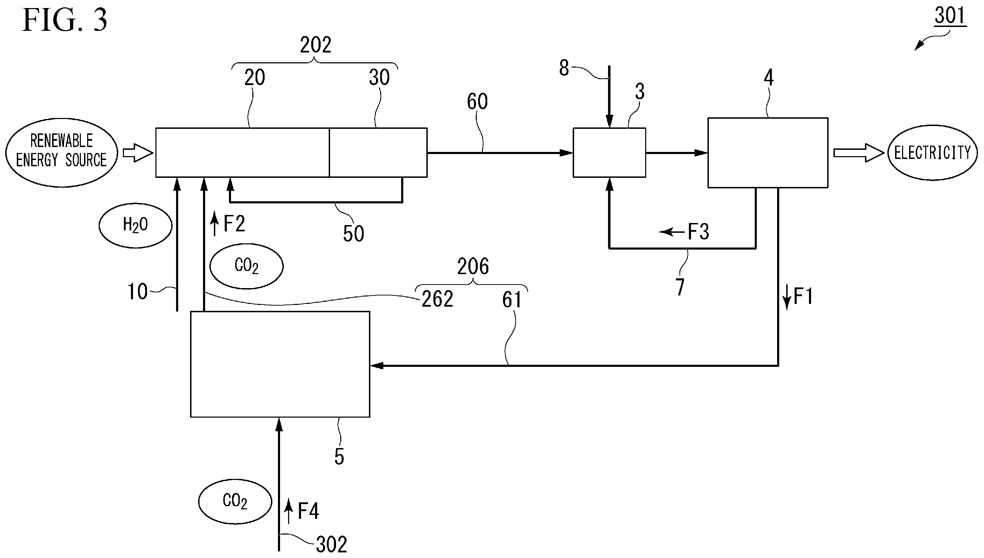

FIG. 3 is a schematic diagram of a methane generation system according to Embodiment 3.

As shown in FIG. 3, the methane generation system 301 includes an auxiliary supply path 302. The auxiliary supply path 302 supplies an auxiliary gas F4, which is supplied from a supply source (not shown), to the recovery device 5. The auxiliary gas F4 contains carbon dioxide. The auxiliary gas F4 is, for example, air. The auxiliary gas F4 may be a gas with higher carbon dioxide concentration than carbon dioxide concentration in air.

In the methane generation system 301, since the auxiliary gas F4, which contains carbon dioxide, can be supplied to the recovery device 5 through the auxiliary supply path 302, the amount of carbon dioxide to be recovered in the recovery device 5 can be increased. Therefore, the amount of carbon dioxide supplied to the methane generation unit 202 can be increased. Therefore, the methane generation efficiency can be increased.

### Embodiment 4

Hereinafter, a methane generation system according to Embodiment 4 will be described. The same configurations as those of Embodiment 2 are designated by the same reference numerals, and a description thereof will be omitted.

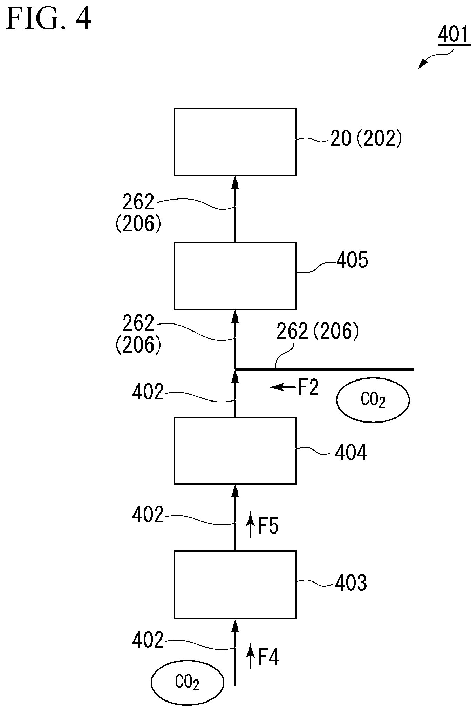

FIG. 4 is a schematic diagram of a part of a methane generation system according to Embodiment 4.

As shown in FIG. 4, the methane generation system 401 includes an auxiliary supply path 402, an auxiliary recovery device 403, an auxiliary concentrator 404, and a concentrator 405.

The auxiliary supply path 402 guides the auxiliary gas F4 supplied from a supply source (not shown). The auxiliary supply path 402 is connected to the circulation path 206 (return passage 262). The auxiliary gas F4 contains carbon dioxide. The auxiliary gas F4 may be air or a gas with higher carbon dioxide concentration than carbon dioxide concentration in air.

The auxiliary recovery device 403 is provided in the auxiliary supply path 402. The auxiliary recovery device 403 separates and recovers an auxiliary recovery gas F5 containing carbon dioxide from the auxiliary gas F4. In the auxiliary recovery device 403, for example, separation methods such as adsorption separation, membrane separation, cooling separation, centrifugal separation, gravity separation, or gas-liquid separation are adopted. The auxiliary recovery device 403 may have the same configuration as the recovery device 5 (see FIG. 1). In the auxiliary recovery device 403, the auxiliary recovery gas F5 with higher carbon dioxide concentration than the auxiliary gas F4 can be obtained.

The auxiliary concentrator 404 is provided in the auxiliary supply path 402. The auxiliary concentrator 404 can increase the carbon dioxide concentration of the auxiliary recovery gas F5 by the same separation methods as those of the auxiliary recovery device 403, such as adsorption separation, membrane separation, cooling separation, centrifugal separation, gravity separation, and gas-liquid separation. The auxiliary recovery gas F5, with increased carbon dioxide concentration, is guided to the circulation path 206 (return passage 262) through the auxiliary supply path 402. The auxiliary recovery gas F5 merges with the recovery gas F2 flowing through the circulation path 206 (return passage 262).

The concentrator 405 is provided in the circulation path 206 (return passage 262). The concentrator 405 can increase the carbon dioxide concentration of the gas flowing through the circulation path 206 (return passage 262) by the same separation methods as those of the auxiliary recovery device 403, such as adsorption separation, membrane separation, cooling separation, centrifugal separation, gravity separation, and gas-liquid separation. The gas with increased carbon dioxide concentration is guided to the methane generation unit 202 through the circulation path 206 (return passage 262).

In the methane generation system 401, the amount of carbon dioxide to be recovered can be increased by the auxiliary supply path 402. In the methane generation system 401, the gas with increased carbon dioxide concentration can be supplied to the methane generation unit 202 by the auxiliary concentrator 404 and the concentrator 405. Therefore, the methane generation efficiency can be increased. Since the methane generation unit 202 can be supplied with the gas with the increased carbon dioxide concentration, the energy efficiency can be increased.

### Embodiment 5

Hereinafter, a methane generation system according to Embodiment 5 will be described. The same configurations as those of Embodiment 2 are designated by the same reference numerals, and a description thereof will be omitted.

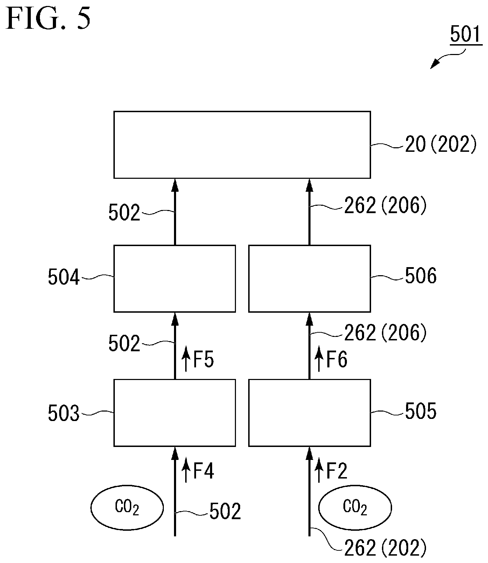

FIG. 5 is a schematic diagram of a part of a methane generation system according to Embodiment 5.

As shown in FIG. 5, the methane generation system 501 includes an auxiliary supply path 502, an auxiliary recovery device 503, an auxiliary concentrator 504, a second recovery device 505, and a concentrator 506.

The auxiliary supply path 502 guides an auxiliary gas F4 supplied from a supply source (not shown).

The auxiliary recovery device 503 is provided in the auxiliary supply path 502. The auxiliary recovery device 503 separates and recovers an auxiliary recovery gas F5 with high carbon dioxide concentration from the auxiliary gas F4.

The auxiliary concentrator 504 is provided in the auxiliary supply path 502. The auxiliary concentrator 504 can increase carbon dioxide concentration of the auxiliary recovery gas F5. The auxiliary recovery gas F5 with increased carbon dioxide concentration is guided to the methane generation unit 202 through the auxiliary supply path 502.

The second recovery device 505 is provided in the circulation path 206 (return passage 262). The second recovery device 505 obtains the recovery gas F6 with increased carbon dioxide concentration from the recovery gas F2.

The concentrator 506 is provided in the circulation path 206 (return passage 262). In the concentrator 506, the carbon dioxide concentration of the recovery gas F6 can be further increased. The recovery gas F6 with an increased carbon dioxide concentration is guided to the methane generation unit 202 through the circulation path 206 (return passage 262).

In the methane generation system 501, the amount of carbon dioxide to be recovered can be increased by the auxiliary supply path 502. In the methane generation system 501, the gas with increased carbon dioxide concentration can be supplied to the methane generation unit 202 by the auxiliary recovery device 503, the auxiliary concentrator 504, the second recovery device 505, and the concentrator 506. Therefore, the methane generation efficiency can be increased. Since the methane generation unit 202 can be supplied with the gas with the increased carbon dioxide concentration, the energy efficiency can be increased.

### Embodiment 6

Hereinafter, a methane generation system according to Embodiment 6 will be described. The same configurations as those of Embodiment 2 are designated by the same reference numerals, and a description thereof will be omitted.

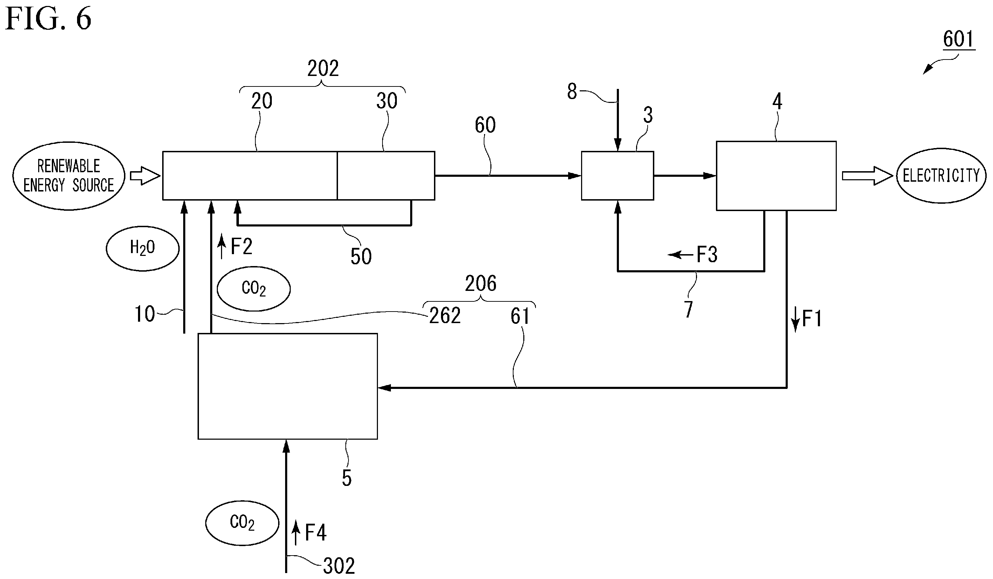

FIG. 6 is a schematic diagram of a methane generation system according to Embodiment 6.

As shown in FIG. 6, the methane generation system 601 includes an auxiliary supply path 302 (see FIG. 3). The auxiliary supply path 302 supplies the auxiliary gas F4 to the recovery device 5.

The concentration of carbon dioxide in the auxiliary gas F4 is higher than that in the air. The auxiliary gas F4 is, for example, indoor air. Since the indoor air contains the exhaled breath of the users in the indoor space, the carbon dioxide concentration is higher than that of the outdoor air. Examples of the auxiliary gas F4 contains exhaust gas discharged from a ventilation device for indoor ventilation provided in a building.

In the methane generation system 601, since the auxiliary gas F4 with high carbon dioxide can be supplied to the recovery device 5 through the auxiliary supply path 302, the amount of carbon dioxide to be recovered in the recovery device 5 can be increased. Therefore, the amount of carbon dioxide supplied to the methane generation unit 202 can be increased. Therefore, the methane generation efficiency can be increased.

### Embodiment 7

Hereinafter, a methane generation system according to Embodiment 7 will be described. The same configurations as those of Embodiment 2 are designated by the same reference numerals, and a description thereof will be omitted.

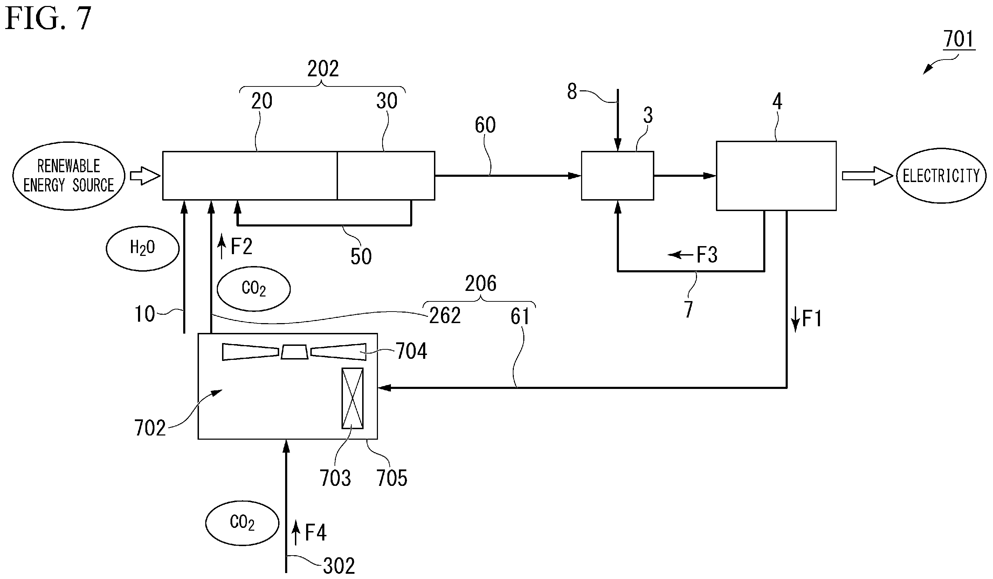

FIG. 7 is a schematic diagram of a methane generation system according to Embodiment 7.

As shown in FIG. 7, the methane generation system 701 differs from the methane generation system 201 (see FIG. 2) of Embodiment 2 in that the methane generation system 701 includes a recovery device 705 instead of the recovery device 5. The recovery device 705 is provided in the air conditioner 702.

The air conditioner 702 can send conditioned air to the indoor space. The air conditioner 702 performs at least one of cooling operation or heating operation. The air conditioner 702 includes a heat exchanger 703 and a blower 704. The heat exchanger 703 is, for example, a heat exchanger for an indoor unit. The heat exchanger 703 adjusts a temperature of the air. The blower 704 sends the air, which has been temperature-adjusted by the heat exchanger 703, to the indoor space.

The characteristics of the recovery device 705 are affected by the temperature and the humidity depending on the separation method. For example, in a case of adsorption separation using an adsorbent, the adsorption characteristics of the adsorbent can be improved by optimizing the temperature and humidity. In a case of separating the adsorbed substance (carbon dioxide) from the adsorbent, the separation characteristics can be improved by optimizing the temperature and humidity. Therefore, the recovery device 705 can obtain the recovery gas F2 with high carbon dioxide concentration by adjusting the temperature and humidity using the heat exchanger 703 of the air conditioner 702.

The recovery device 705 can adjust the temperature by using the heat of the return fluid F1 from the fuel cell 4. Therefore, the recovery gas F2 with high carbon dioxide concentration can be obtained by adjusting the temperature using the waste heat from the fuel cell 4.

In the methane generation system 701, since the temperature and humidity are adjusted using the existing air conditioner 702, the device cost can be reduced compared to using dedicated temperature adjusting means in the recovery device.

The characteristics of the recovery device 705 are affected by the flow of the return fluid F1 depending on the separation method. For example, in a case of adsorption separation using the adsorbent, the adsorption characteristics of the adsorbent can be improved by optimizing the flow velocity of the return fluid F1 in contact with the adsorbent. In a case of separating the adsorbed substance (carbon dioxide) from the adsorbent, the separation characteristics from the adsorbent can be improved by optimizing the flow velocity of the return fluid F1 and the like. Therefore, the recovery device 705 can obtain the recovery gas F2 with high carbon dioxide concentration by adjusting the blowing air volume using the blower 704 of the air conditioner 702.

However, the technical scope of the present invention is not limited to the above embodiments, and various modifications can be made without departing from the gist of the present invention.

For example, the number of recovery devices, auxiliary recovery devices, concentrators, and auxiliary concentrators may each be one or a plurality (any number of two or more).

In the electrolysis device 120 (see FIG. 1) and the co-electrolysis device 20 (see FIG. 2), oxygen (O₂) is generated by electrolysis. The oxygen may be supplied to the reformer 3 through the supply path 8 as an oxygen-containing gas (see FIGS. 1 and 2). As the oxygen-containing gas, a mixed gas containing oxygen obtained from an electrolysis device and air may be used. That is, the oxygen-containing gas may be a gas containing oxygen obtained from the electrolysis device.

According to this method, the concentration of components other than oxygen (such as nitrogen) in the oxygen-containing gas can be reduced. Therefore, the carbon dioxide concentration of the product gas from the fuel cell 4 can be increased. Therefore, the carbon dioxide concentration of the recovery gas F2 obtained by the recovery device 5 can be increased.

### List of Reference Signs

- 1, 201, 301, 401, 501, 601, 701:: Methane generation system
- 2, 202:: Methane generation unit
- 3:: Reformer
- 4:: Fuel cell
- 5:: Recovery device
- 6:: Circulation path
- 7:: Return path
- 20:: Co-electrolysis device (electrolysis device)
- 30, 130:: Methane reactor
- 120:: Electrolysis device
- 302, 402, 502:: Auxiliary supply path
- 404, 504:: Auxiliary concentrator
- 405, 506:: Concentrator
- 702:: Air conditioner
- 703:: Heat exchanger
- 704:: Blower
- F1:: Return fluid
- F2:: Recovery gas
- F4:: Auxiliary gas

## Claims

1. A methane generation system (1, 201, 301, 401, 501, 601, 701) comprising:
- a methane generation unit (2, 202) including an electrolysis device (120) that is configured to electrolyze water to obtain hydrogen and a methane reactor (30, 130) that is configured to obtain a fuel gas containing methane by a methanation reaction using the hydrogen;
- a reformer (3) that is configured to reform the fuel gas to obtain a reformed gas;
- a fuel cell (4) that is configured to generate electricity by a reaction of obtaining a product gas from the reformed gas and an oxygen-containing gas;
- a recovery device (5) that is configured to separate a recovery gas (F2) containing carbon dioxide from return fluid (F1) which is a part of the product gas; and
- a circulation path (6, 206) through which the recovery gas (F2) is guided to the methane generation unit (2, 202).

2. The methane generation system (201, 301, 401, 501, 601, 701) according to Claim 1,
wherein the electrolysis device (120) is a co-electrolysis device (20) that is configured to obtain the hydrogen and carbon monoxide from the water and carbon dioxide by electrolysis.

3. The methane generation system (1, 201, 301, 401, 501, 601, 701) according to Claim 1,
further comprising:
a return path (7) through which a part of the product gas is guided to the reformer (3).

4. The methane generation system (301) according to Claim 1,
further comprising:
an auxiliary supply path (302) through which an auxiliary gas (F4) containing carbon dioxide is supplied to the recovery device (5).

5. The methane generation system (401, 501) according to Claim 1,
wherein a concentrator (405, 506) that is configured to increase concentration of carbon dioxide contained in a gas flowing through the circulation path (206) is provided in the circulation path (206).

6. The methane generation system (401, 501) according to Claim 1,
further comprising:
an auxiliary supply path (402, 502) through which an auxiliary gas (F4) containing carbon dioxide is supplied to the circulation path (206); and
an auxiliary concentrator (404, 504) that is configured to increase concentration of the carbon dioxide contained in the auxiliary gas (F4).

7. The methane generation system (501) according to Claim 5,
further comprising:
an auxiliary supply path (502) through which an auxiliary gas (F4) containing carbon dioxide is supplied to the methane generation unit (20, 202); and
an auxiliary concentrator (504) that is configured to increase concentration of the carbon dioxide contained in the auxiliary gas (F4).

8. The methane generation system (601) according to Claim 4,
wherein the auxiliary supply path (302) is configured to supply indoor air as the auxiliary gas (F4).

9. The methane generation system (701) according to Claim 1, further comprises an air conditioner (702),
wherein the recovery device (705) is provided in the air conditioner (702) and is configured to obtain the recovery gas by adjusting a temperature with a heat exchanger (703) of the air conditioner (702).

10. The methane generation system (701) according to Claim 1, further comprises an air conditioner (702),
wherein the recovery device (705) is provided in the air conditioner (702) and is configured to obtain the recovery gas (F2) by using air blowing from a blower (704) of an air conditioner (702).

11. The methane generation system (701) according to Claim 1, further comprises an air conditioner (702),
wherein the recovery device (705) is provided in the air conditioner (702) and is configured to obtain the recovery gas (F2) by adjusting a temperature with a heat exchanger (703) of an air conditioner (702) and the fuel cell (4).

12. The methane generation system (1, 201, 301, 401, 501, 601, 701) according to Claim 1,
wherein the electrolysis device (120, 20) is configured to generate oxygen by electrolysis and supply to the fuel cell (4) via the reformer (3) as the oxygen-containing gas.

## Patentansprüche

1. Methanerzeugungssystem (1, 201, 301, 401, 501, 601, 701), welches Folgendes aufweist:
- eine Methanerzeugungseinheit (2, 202) mit einer Elektrolysevorrichtung (120), die konfiguriert ist, Wasser zu elektrolysieren, um Wasserstoff zu gewinnen, und einem Methanreaktor (30, 130), der konfiguriert ist, durch eine Methanisierungsreaktion unter Verwendung des Wasserstoffs ein methanhaltiges Brenngas zu gewinnen;
- einen Reformer (3), der konfiguriert ist, das Brenngas zu reformieren, um ein reformiertes Gas zu gewinnen;
- eine Brennstoffzelle (4), die konfiguriert ist, durch eine Reaktion, bei der aus dem reformierten Gas und einem sauerstoffhaltigen Gas ein Produktgas gewonnen wird, Strom zu erzeugen;
- eine Rückgewinnungsvorrichtung (5), die konfiguriert ist, ein Kohlendioxid enthaltendes Rückgewinnungsgas (F2) aus dem Rückführfluid (F1), das Teil des Produktgases ist, abzuscheiden; und
- einen Zirkulationsweg (6, 206), durch den das Rückgewinnungsgas (F2) zur Methangerzeugungseinheit (2, 202) geleitet wird.

2. Methanerzeugungssystem (201, 301, 401, 501, 601, 701) nach Anspruch 1, wobei die Elektrolysevorrichtung (120) eine Co-Elektrolysevorrichtung (20) ist, die konfiguriert ist, den Wasserstoff und Kohlenmonoxid durch Elektrolyse aus dem Wasser und Kohlendioxid zu gewinnen.

3. Methanerzeugungssystem (1, 201, 301, 401, 501, 601, 701) nach Anspruch 1, welches ferner Folgendes aufweist:
einen Rückführungsweg (7), durch den ein Teil des Produktgases zum Reformer (3) geleitet wird.

4. Methanerzeugungssystem (301) nach Anspruch 1,
welches ferner Folgendes aufweist:
einen Hilfsversorgungsweg (302), durch den ein Kohlendioxid enthaltendes Hilfsgas (F4) der Rückgewinnungsvorrichtung (5) zugeführt wird.

5. Methanerzeugungssystem (401, 501) nach Anspruch 1,
wobei ein Konzentrator (405, 506), der konfiguriert ist, die Konzentration von Kohlendioxid zu erhöhen, das in einem durch den Zirkulationsweg (206) strömenden Gas enthalten ist, in dem Zirkulationsweg (206) angeordnet ist.

6. Methangerzeugungssystem (401, 501) nach Anspruch 1,
welches ferner Folgendes aufweist:
einen Hilfsversorgungsweg (402, 502), durch den ein Kohlendioxid enthaltendes Hilfsgas (F4) dem Zirkulationsweg (206) zugeführt wird; und
einen Hilfskonzentrator (404, 504), der konfiguriert ist, die Konzentration des im Hilfsgas (F4) enthaltenen Kohlendioxids zu erhöhen.

7. Methangerzeugungssystem (501) nach Anspruch 5,
welches ferner Folgendes aufweist:
einen Hilfsversorgungsweg (502), durch den ein Kohlendioxid enthaltendes Hilfsgas (F4) der Methangerzeugungseinheit (20, 202) zugeführt wird; und
einen Hilfskonzentrator (504), der konfiguriert ist, die Konzentration des im Hilfsgas (F4) enthaltenen Kohlendioxids zu erhöhen.

8. Methangerzeugungssystem (601) nach Anspruch 4,
wobei der Hilfsversorgungsweg (302) konfiguriert ist, Innenluft als Hilfsgas (F4) zuzuführen.

9. Methangerzeugungssystem (701) nach Anspruch 1,
welches ferner eine Klimaanlage (702) aufweist,
wobei die Rückgewinnungsvorrichtung (705) in der Klimaanlage (702) angeordnet ist und konfiguriert ist, das Rückgewinnungsgas durch Einstellen einer Temperatur mit einem Wärmetauscher (703) der Klimaanlage (702) zu erhalten.

10. Methangerzeugungssystem (701) nach Anspruch 1,
welches ferner eine Klimaanlage (702) aufweist,
wobei die Rückgewinnungsvorrichtung (705) in der Klimaanlage (702) angeordnet ist und konfiguriert ist, das Rückgewinnungsgas (F2) unter Verwendung von Luft zu erhalten, die von einem Gebläse (704) einer Klimaanlage (702) ausgeblasen wird.

11. Methangerzeugungssystem (701) nach Anspruch 1,
welches ferner eine Klimaanlage (702) aufweist,
wobei die Rückgewinnungsvorrichtung (705) in der Klimaanlage (702) angeordnet ist und konfiguriert ist, das Rückgewinnungsgas (F2) durch Einstellen einer Temperatur mit einem Wärmetauscher (703) einer Klimaanlage (702) und der Brennstoffzelle (4) zu erhalten.

12. Methangerzeugungssystem (1, 201, 301, 401, 501, 601, 701) nach Anspruch 1, wobei die Elektrolysevorrichtung (120, 20) konfiguriert ist, durch Elektrolyse Sauerstoff zu erzeugen und diesen über den Reformer (3) als sauerstoffhaltiges Gas der Brennstoffzelle (4) zuzuführen.

## Revendications

1. Système de génération de méthane (1, 201, 301, 401, 501, 601, 701) comprenant :
- une unité de génération de méthane (2, 202) incluant un dispositif d'électrolyse (120) qui est configuré pour une électrolyse de l'eau pour obtenir de l'hydrogène, et un réacteur à méthane (30, 130) qui est configuré pour obtenir un gaz combustible contenant du méthane par réaction de méthanisation en utilisant l'hydrogène ;
- un reformeur (3) qui est configuré pour reformer le gaz combustible pour obtenir un gaz reformé ;
- une pile à combustible (4) qui est configurée pour générer de l'électricité via une réaction consistant à obtenir un gaz produit à partir du gaz reformé et d'un gaz contenant de l'oxygène ;
- un dispositif de récupération (5) qui est configuré pour séparer un gaz de récupération (F2) contenant du dioxyde de carbone d'un fluide de retour (F1) qui est une partie du gaz produit ; et
- un trajet de circulation (6, 206) à travers lequel le gaz de récupération (F2) est guidé jusqu'à l'unité de génération de méthane (2, 202).

2. Système de génération de méthane (201, 301, 401, 501, 601, 701) selon la revendication 1,
dans lequel le dispositif d'électrolyse (120) est un dispositif de co-électrolyse (20) qui est configuré pour obtenir l'hydrogène et du monoxyde de carbone à partir de l'eau et de dioxyde de carbone par électrolyse.

3. Système de génération de méthane (1, 201, 301, 401, 501, 601, 701) selon la revendication 1,
comprenant en outre :
un trajet de retour (7) à travers lequel une partie du gaz produit est guidée jusqu'au reformeur (3).

4. Système de génération de méthane (301) selon la revendication 1, comprenant en outre :
un trajet d'alimentation auxiliaire (302) à travers lequel un gaz auxiliaire (F4) contenant du dioxyde de carbone est alimenté jusqu'au dispositif de récupération (5).

5. Système de génération de méthane (401, 501) selon la revendication 1, dans lequel un concentrateur (405, 506) qui est configuré pour augmenter une concentration de dioxyde de carbone contenu dans un gaz s'écoulant à travers le trajet de circulation (206) est prévu dans le trajet de circulation (206).

6. Système de génération de méthane (401, 501) selon la revendication 1, comprenant en outre :
un trajet d'alimentation auxiliaire (402, 502) à travers lequel un gaz auxiliaire (F4) contenant du dioxyde de carbone est alimenté jusqu'au trajet de circulation (206) ; et
un concentrateur auxiliaire (404, 504) qui est configuré pour augmenter une concentration du dioxyde de carbone contenu dans le gaz auxiliaire (F4).

7. Système de génération de méthane (501) selon la revendication 5, comprenant en outre :
un trajet d'alimentation auxiliaire (502) à travers lequel un gaz auxiliaire (F4) contenant du dioxyde de carbone est alimenté jusqu'à l'unité de génération de méthane (20, 202) ; et
un concentrateur auxiliaire (504) qui est configuré pour augmenter une concentration du dioxyde de carbone contenu dans le gaz auxiliaire (F4).

8. Système de génération de méthane (601) selon la revendication 4,
dans lequel le trajet d'alimentation auxiliaire (302) est configuré pour alimenter de l'air interne à titre de gaz auxiliaire (F4).

9. Système de génération de méthane (701) selon la revendication 1, comprenant en outre un appareil de conditionnement d'air (702),
dans lequel le dispositif de récupération (705) est prévu dans l'appareil de conditionnement d'air (702) et est configuré pour obtenir le gaz de récupération en ajustant une température avec un échangeur de chaleur (703) de l'appareil de conditionnement d'air (702).

10. Système de génération de méthane (701) selon la revendication 1, comprenant en outre un appareil de conditionnement d'air (702),
dans lequel le dispositif de récupération (705) est prévu dans l'appareil de conditionnement d'air (702) et est configuré pour obtenir le gaz de récupération (F2) en utilisant un soufflage d'air provenant d'une soufflante (704) d'un appareil de conditionnement d'air (702).

11. Système de génération de méthane (701) selon la revendication 1, comprenant en outre un appareil de conditionnement d'air (702),
dans lequel le dispositif de récupération (705) est prévu dans l'appareil de conditionnement d'air (702) et est configuré pour obtenir le gaz de récupération (F2) en ajustant une température avec un échangeur de chaleur (703) d'un appareil de conditionnement d'air (702) et la pile à combustible (4).

12. Système de génération de méthane (1, 201, 301, 401, 501, 601, 701) selon la revendication 1,
dans lequel le dispositif d'électrolyse (120, 20) est configuré pour générer de l'oxygène par électrolyse et alimenter la pile à combustible (4) via le reformeur (3) à titre de gaz contenant de l'oxygène.
